# FASCICULE DE BREVET EUROPEEN

(11) **EP 3 187 827 B1**
(45) Date de publication et mention de la délivrance du brevet: **11.03.2020**
(21) Numéro de dépôt: 16206135.2
(22) Date de dépôt: 22.12.2016
(51) Int. Cl.: G01C 23/00, G08G 5/02, G06T 15/00

(54) **PROCEDE DE REPRESENTATION GRAPHIQUE TRIDIMENSIONNELLE D'UNE PISTE D'ATTERRISSAGE SUR UN DISPOSITIF DE VISUALISATION D'AERONEF**
GRAFISCHES 3D-DARSTELLUNGSVERFAHREN EINER LANDEBAHN AUF EINER ANZEIGEVORRICHTUNG EINES LUFTFAHRZEUGS
METHOD FOR THREE-DIMENSIONAL GRAPHICAL REPRESENTATION OF A RUNWAY ON AN AIRCRAFT DISPLAY DEVICE

(30) Priorité: 29.12.2015 FR 1502718
(43) Date de publication de la demande: 05.07.2017
(73) Titulaire: Thales, 92400 Courbevoie (FR)
(72) Inventeur: MONVOISIN, Emmanuel, 33187 Le Haillan Cedex (FR); MARIANI, Pierre, 33187 Le Haillan Cedex (FR); DUMAS, Pierre-Yves, 33187 Le Haillan Cedex (FR); LUX, Johanna, 33187 Le Haillan Cedex (FR)
(74) Mandataire: Bréda, Jean-Marc

(56) Documents cités:
- EP-A2- 2 511 733
- US-B2- 8 589 071

## Description

Le domaine de l'invention est celui des interfaces homme-système pour des applications aéronautiques, et plus particulièrement celui des systèmes de visualisation synthétiques comportant des moyens d'afficher une image synthétique tridimensionnelle du paysage extérieur.

Les aéronefs modernes possèdent généralement un système de vision synthétique dit « SVS », acronyme de « Synthetic Vision System ». Ce système permet de présenter à l'équipage une image synthétique du paysage extérieur comportant généralement des informations sur le pilotage ou la navigation.

Un système SVS comporte une base de données cartographique représentative du terrain survolé, un système de géolocalisation, des moyens de calcul électroniques et un ou plusieurs dispositifs de visualisation implantés dans le cockpit de l'aéronef. Le système de géolocalisation est du type « GPS », acronyme de « Global Positioning System ». Il peut être couplé avec le système inertiel de l'appareil. L'ensemble du système de géolocalisation fournit au moins les paramètres suivants : position de l'aéronef en latitude, longitude et altitude et orientation de l'aéronef en tangage, roulis et cap.

Généralement, l'image est affichée sur les écrans de visualisation qui se trouvent en face avant du tableau de bord de l'aéronef. L'image est une vue tridimensionnelle de l'extérieur représentée de la façon la plus réaliste possible. Le point de vue affiché est dans l'axe de l'appareil.

Ce type de système, très attrayant pour l'utilisateur, présente une vue telle qu'elle peut rassurer de façon excessive cet utilisateur sur la position des éléments autour de lui et, en particulier, les pistes d'atterrissage. Pourtant, selon la qualité du système de positionnement, l'image n'est pas exacte ou ne peut l'être que partiellement. Les systèmes actuels partent de l'hypothèse que la qualité du positionnement est suffisante pour garantir la qualité des informations présentées. Mais cette hypothèse peut être fausse dans certains cas, en particulier lorsque l'aéronef est très proche du sol.

Les types d'erreurs que l'on peut rencontrer sont des erreurs de positionnement en horizontal et en vertical qui peuvent amener à se poser en dehors de la piste, ce qui n'est pas acceptable.

Un moyen de résoudre ce problème est de présenter à l'utilisateur les zones de l'image qui sont crédibles et les zones qui ne le sont pas, compte tenu de la précision fournie par le système de géolocalisation. La zone « non crédible » est alors indiquée par une coloration opaque ou semi-transparente ou bien par une zone volontairement floue. L'inconvénient de cette solution est qu'elle peut masquer une grande partie du terrain synthétique, alors qu'en phase d'approche sur une piste d'atterrissage, le terrain est généralement plat autour de la piste. Il n'est donc pas nécessaire de le masquer puisqu'une erreur de positionnement en horizontal et en vertical, se traduit par une translation ou une rotation du terrain, donc cette erreur sera peu visible sur le terrain autour de la piste.

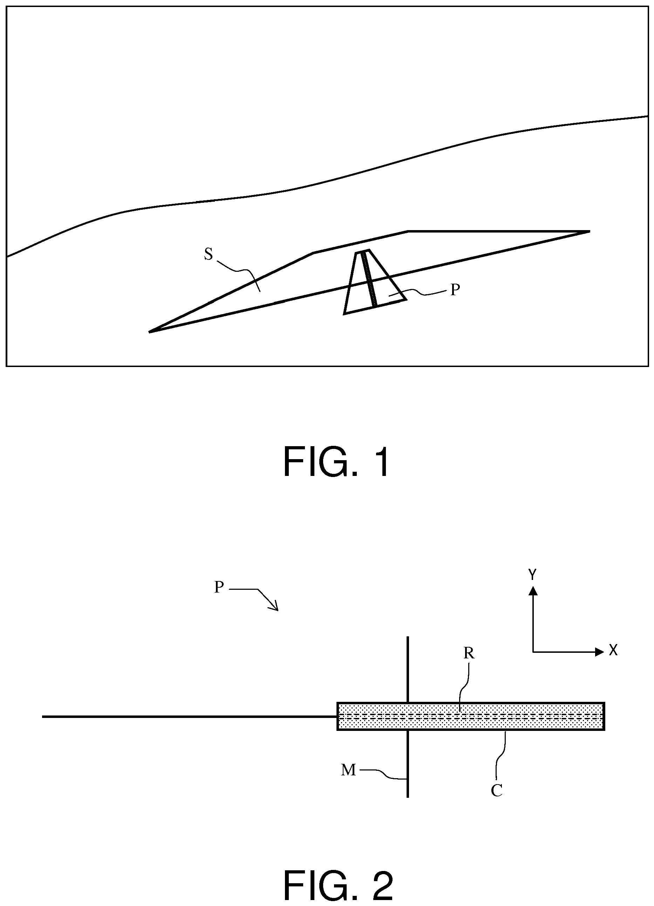

Une autre solution est décrite dans le brevet US 8 589 071 intitulé « Aircraft Vision System including a runway position indicator ». Elle est illustrée en figure 1. L'affichage comporte un symbole spécifique S autour de la position supposée de la piste P. Comme on le voit sur la figure 1, ce symbole est plus grand que la piste réelle afin d'aider le pilote à acquérir visuellement la piste d'atterrissage en lui donnant une indication sur la zone à regarder. L'inconvénient de cette solution est qu'elle ajoute des symboles sur la représentation graphique et donc accroit la charge de travail du pilote pour interpréter l'ensemble des informations affichées.

Un autre exemple de représentation de déviations latérales se trouve dans le document EP2511733.

Le procédé de représentation d'aide à l'atterrissage dans une vue synthétique tridimensionnelle selon l'invention ne présente pas ces inconvénients. Il utilise les symboles existants mais change leurs représentations graphiques en fonction des erreurs de positionnement. Plus précisément, l'invention a pour objet un procédé de représentation graphique tridimensionnelle d'au moins une piste d'atterrissage sur un dispositif de visualisation d'un système de visualisation de bord pour aéronef, ladite représentation graphique étant affichée dans une vue synthétique d'un paysage extérieur, ladite piste comportant une forme rectangulaire colorée, un contour entourant ladite forme et des marquages, la position de l'aéronef par rapport à ladite piste étant connue dans un plan horizontal avec une première précision et dans un axe vertical avec une seconde précision, caractérisé en ce que, lorsque la première précision est au-delà d'un premier seuil et/ou lorsque la seconde précision est au-delà d'un second seuil, l'aspect de la forme rectangulaire ou du contour ou au moins d'un marquage est modifié.

Avantageusement, la modification d'aspect est un agrandissement de la forme rectangulaire, cet agrandissement consistant à rendre flou le périmètre de la forme rectangulaire sur une largeur fonction de la première et/ou de la seconde précision.

Avantageusement, le flou est un gradient continu de transparence, la transparence croissant avec la distance au centre de la piste, la loi de transparence pouvant être, sans s'y limiter, une fonction gaussienne ou linéaire ou radiale.

Avantageusement, le flou est obtenu par un ensemble de rectangles imbriqués, chaque rectangle ayant une valeur de transparence croissante avec la distance au centre de la piste.

Avantageusement, la modification d'aspect consiste en une transparence progressive de la forme rectangulaire, la transparence étant une fonction croissante de la première et/ou de la seconde précision, la forme rectangulaire étant totalement opaque lorsque la première précision est en-deçà du premier seuil et/ou lorsque la seconde précision est en-deçà du second seuil et totalement transparente lorsque la première précision est au-delà d'un troisième seuil et/ou lorsque la seconde précision est au-delà d'un quatrième seuil.

Avantageusement, la modification d'aspect consiste à passer le contour en pointillés et à l'agrandir, l'agrandissement étant une fonction croissante de la première et/ou de la seconde précision.

Avantageusement, la modification d'aspect consiste à supprimer le contour.

Avantageusement, la modification d'aspect consiste en une transparence progressive des marquages, la transparence étant une fonction croissante de la première et/ou de la seconde précision, les marquages étant totalement opaques lorsque la première précision est en-deçà du premier seuil et/ou lorsque la seconde précision est en-deçà du second seuil, et totalement transparents lorsque la première précision est au-delà d'un cinquième seuil et/ou lorsque la seconde précision est au-delà d'un sixième seuil.

Avantageusement, lorsque l'affichage comporte plusieurs pistes appartenant à un même aéroport, tout ou partie de la représentation graphique des pistes subit simultanément les mêmes modifications d'aspect.

Avantageusement, les modifications d'aspect se font de façon progressive.

Avantageusement, le procédé comporte au moins deux modifications d'aspect différentes, la première modification d'aspect dépendant du premier seuil et du second seuil de précision, la seconde modification d'aspect dépendant d'un septième seuil et d'un huitième seuil de précision, la seconde modification d'aspect succédant ou s'ajoutant à la première modification.

Avantageusement, les modifications d'aspect ne sont effectives que lorsque l'aéronef est en-dessous d'une distance déterminée à la piste.

Avantageusement, le dispositif de visualisation comporte une image réelle du paysage extérieur en superposition sur la vue synthétique du paysage extérieur.

Avantageusement, le dispositif de visualisation est un des écrans de la planche de bord de l'aéronef.

Avantageusement, le dispositif de visualisation est un dispositif de visualisation dit « Tête Haute » comportant un élément optique superposant l'image synthétique et/ou l'image réelle sur le paysage extérieur.

L'invention sera mieux comprise et d'autres avantages apparaîtront à la lecture de la description qui va suivre donnée à titre non limitatif et grâce aux figures annexées parmi lesquelles :
La figure 1 représente une vue graphique tridimensionnelle d'une piste d'atterrissage sur un dispositif de visualisation d'aéronef selon l'art antérieur ;
La figure 2 représente la représentation synthétique d'une piste en vue de dessus en représentation nominale ;
La figure 3 représente dans un axe de coupe le degré d'opacité de la piste en représentation nominale ;
La figure 4 représente dans un axe de coupe le degré d'opacité de la piste dans un premier mode de représentation selon l'invention ;
La figure 5 représente dans un axe de coupe le degré d'opacité de la piste dans un second mode de représentation selon l'invention ;
La figure 6 représente dans un axe de coupe le degré d'opacité de la piste dans un troisième mode de représentation selon l'invention ;
La figure 7 représente la représentation synthétique d'une piste en vue de dessus dans un quatrième mode de représentation selon l'invention ;
La figure 8 représente une vue graphique tridimensionnelle d'une piste d'atterrissage sur un dispositif de visualisation d'aéronef selon l'invention.

Le procédé selon l'invention est mis en œuvre dans un système de visualisation synthétique ou SVS embarqué sur aéronef. Celui-ci comporte au moins une base de données cartographique, des moyens de géolocalisation, des moyens électroniques permettant de calculer une représentation des principaux paramètres de l'aéronef, un calculateur graphique et au moins un dispositif de visualisation. Les moyens de géolocalisation sont, à titre d'exemple, de type « GPS », acronyme de « Global Positioning System » couplés/hybridés ou non avec des centrales inertielles.

L'affichage sur l'écran du dispositif de visualisation représente une vue synthétique tridimensionnelle du terrain survolé. Cette vue peut comporter une représentation synthétique d'une piste d'atterrissage. A titre d'exemple, la figure 2 montre la représentation synthétique d'une piste P en vue de dessus en représentation nominale dans un repère (X, Y). Classiquement, cette piste comporte une forme R rectangulaire colorée, un contour C entourant ladite forme et des marquages M représentatifs des marquages existants au sol. La piste synthétique peut être représentée par un rectangle gris avec des marquages blancs représentant le numéro de piste, l'axe de piste, la zone de touché, ....

Dans le procédé selon l'invention, la position de l'aéronef par rapport à ladite piste étant connue dans un plan horizontal avec une première précision et dans un axe vertical avec une seconde précision, lorsque la première précision est au-delà d'un premier seuil et/ou lorsque la seconde précision est au-delà d'un second seuil, l'aspect de la forme rectangulaire ou du contour ou au moins d'un marquage est modifié.

La précision de positionnement peut, par exemple, être obtenue à partir du facteur de mérite ou « FOM » donné en temps réel par le récepteur GPS. Il existe un FOM pour la position horizontale dit HFOM, applicable à la latitude et la longitude de l'aéronef, et un FOM pour la position verticale dit VFOM, applicable à l'altitude de l'aéronef. La combinaison du HFOM et du VFOM donne une sphère de précision de positionnement autour de la position de l'aéronef donnée par le GPS. Le FOM est un majorant du rayon de cette sphère. Par exemple, si l'erreur à 95% réelle est de 10 m, le FOM indique 25 m. Donc, si on définit que l'erreur maximale acceptable est de 20 m, il ne faut pas se baser sur la valeur brute du FOM. On risque de modifier la représentation de la piste sans raison. De préférence, pour obtenir la précision utile, on multiplie le FOM par un coefficient donné pour obtenir une vraie valeur à 95%.

Pour donner des ordres de grandeur, la valeur seuil horizontale, maximum acceptable de la valeur horizontale réelle de l'erreur de position à 95% est égale à 20 m, ce qui représente une erreur de +/-20 m en horizontal.

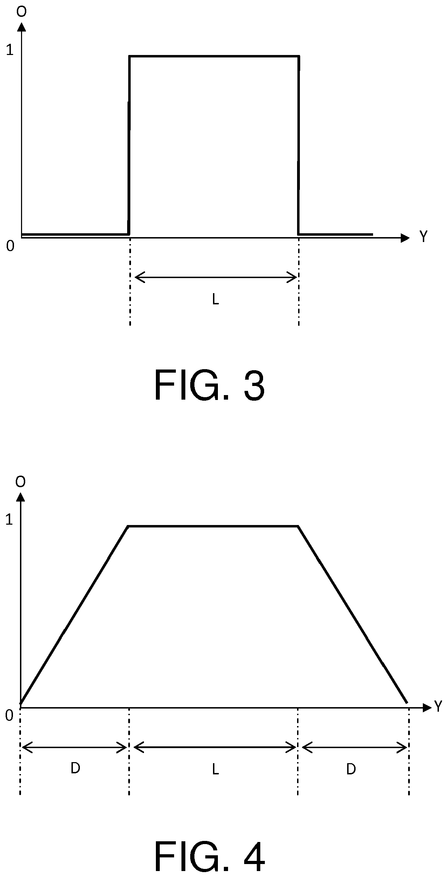

La première modification d'aspect que l'on peut effectuer est un agrandissement de la forme rectangulaire de la piste, cet agrandissement consistant à rendre flou le périmètre de la forme rectangulaire sur une largeur fonction de la première et/ou de la seconde précision. A titre d'exemple, lorsque la situation est nominale, la piste est nette et ces bords sont parfaitement définis. La figure 3 représente alors la variation d'opacité de la piste le long d'un axe Y perpendiculaire à l'axe de piste. La piste est parfaitement opaque sur une largeur L égale à celle de l'axe de piste et transparente en dehors.

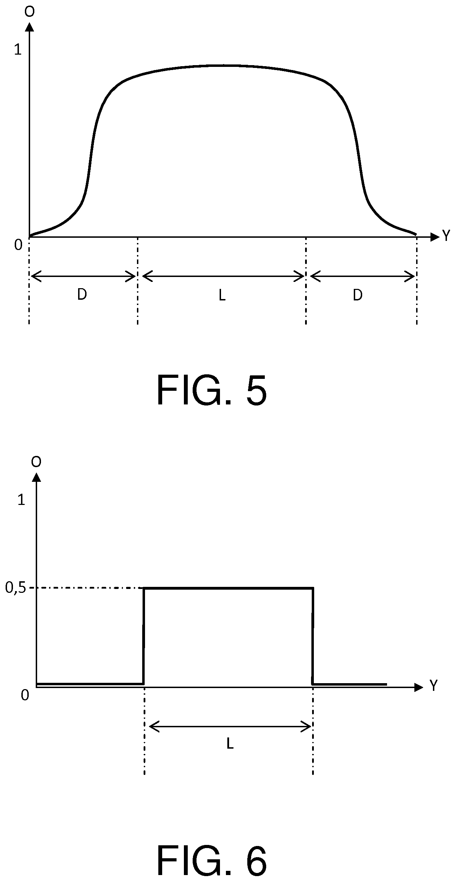

Lorsque la piste devient floue, ces bords s'agrandissent. L'opacité varie alors continument sur une certaine largeur D. Un premier exemple est représenté sur les figures 4 et 5 qui montrent la variation d'opacité de la piste le long d'un axe Y perpendiculaire à l'axe de piste. Sur ces deux figures, le flou est un gradient continu de transparence, la transparence croissant avec la distance au centre de la piste, la loi de transparence étant une fonction linéaire comme représenté sur la figure 4 ou gaussienne comme représenté sur la figure 5 ou encore radiale. A titre de second exemple, le flou est représenté par un ensemble de rectangles imbriqués, chaque rectangle ayant une valeur de transparence croissante en allant vers l'extérieur de la piste. Le degré d'opacité de la piste, dans un axe de coupe, est en forme de marches d'escalier.

La seconde modification d'aspect est une transparence progressive de la piste. La transparence est une fonction croissante de la première et/ou de la seconde précision, la forme rectangulaire étant totalement opaque lorsque la première précision est en-deçà d'un premier seuil et/ou lorsque la seconde précision est en-deçà d'un second seuil et totalement transparente lorsque la première précision est au-delà d'un troisième seuil et/ou lorsque la seconde précision est au-delà d'un quatrième seuil. Cette seconde modification est illustrée par la figure 6 qui montre la variation d'opacité de la piste le long d'un axe Y perpendiculaire à l'axe de piste. Dans le cas de la figure 6, l'opacité le long de la piste n'est plus que de 50%.

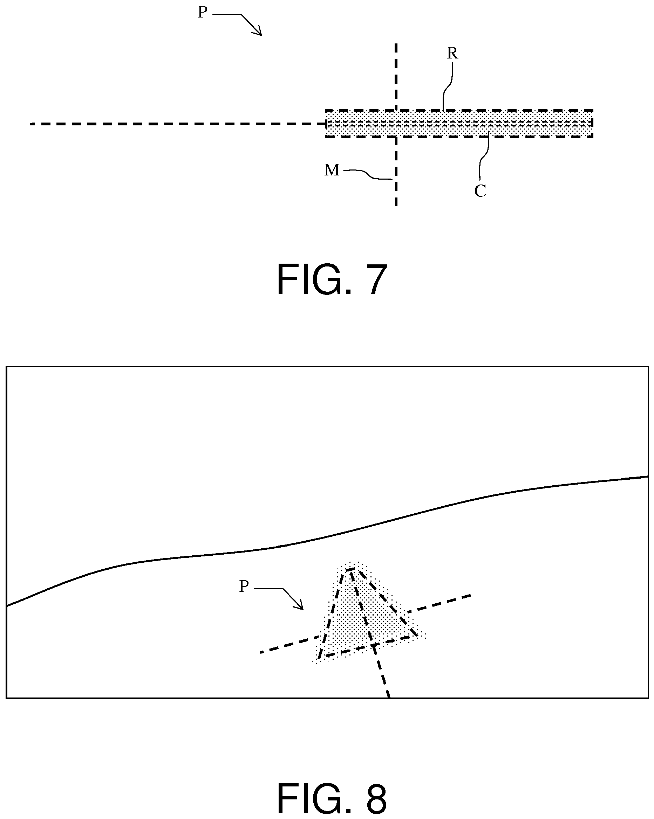

La troisième modification d'aspect consiste à passer le contour en pointillés et à l'agrandir, l'agrandissement de la forme rectangulaire du contour étant une fonction croissante de la première et/ou de la seconde précision. Cette modification est illustrée en figure 7 qui montre la représentation synthétique d'une piste en vue de dessus avec son contour en pointillés. Les pointillés peuvent s'espacer jusqu'à la disparition totale du contour. Dans une première variante de réalisation, les pointillés peuvent être remplacés par un clignotement avec une fréquence de clignotement plus ou moins grande et un temps d'apparition du contour de la piste plus ou moins important. Dans une seconde variante, le contour peut s'estomper, devenir de plus en plus transparent jusqu'à sa disparition totale. Dans une troisième variante, la représentation du contour de la piste peut être un mélange des variantes précédentes.

La quatrième modification d'aspect consiste en une transparence progressive des différents marquages, la transparence étant une fonction croissante de la première et/ou de la seconde précision, les marquages étant totalement opaques lorsque la première précision est en-deçà d'un premier seuil et/ou lorsque la seconde précision est en-deçà d'un second seuil, et totalement transparents lorsque la première précision est au-delà d'un cinquième seuil et/ou lorsque la seconde précision est au-delà d'un sixième seuil. Ce cinquième seuil et ce sixième seuil peuvent être identiques ou différents des troisième et quatrième seuils. Dans une variante de réalisation, la transparence peut être remplacée par un clignotement avec une fréquence de clignotement plus ou moins grande et un temps d'apparition des marquages plus ou moins important.

Lorsque l'atterrissage a lieu sur un aéroport comportant plusieurs pistes, tout ou partie de la représentation graphique des pistes peut subir simultanément les mêmes modifications d'aspect telles que décrites ci-dessus. A titre alternatif, il est possible de ne modifier l'affichage que de la piste d'atterrissage qui est effectivement utilisée par l'aéronef.

D'une façon générale, les modifications d'aspect se font de façon progressive de façon à éviter tout changement intempestif dans la représentation graphique. Le procédé comporte une fonction d'hystérésis permettant de régler ce problème.

Plusieurs modifications d'aspect telles que décrites ci-dessus peuvent être mises en œuvre soit simultanément, soit se succéder dans le temps avec des seuils de précision qui peuvent être identiques ou différents. A titre d'exemples non limitatifs, il est possible, comme illustré sur la figure 8 qui représente une vue synthétique tridimensionnelle d'une piste affichée par le procédé selon l'invention, de faire les modifications suivantes. Sur cette vue, le périmètre de la piste est flou, son contour est représenté en pointillés ainsi que les différents marqueurs de piste. A titre de second exemple, il est possible, dans un premier temps, de rendre la piste floue en conservant son pourtour en traits pleins, puis, si les erreurs sont plus importantes, de remplacer le contour en traits pleins par un contour en pointillés. Les différentes combinaisons possibles de modifications entrent toutes dans le cadre du procédé selon l'invention.

Préférentiellement, les modifications d'aspect ne sont effectives que lorsque l'aéronef est en-dessous d'une distance déterminée à la piste. Ce seuil de changement d'affichage lié à la distance a un sens car une erreur de positionnement de la piste qui se chiffre en mètres est peu visible à une grande distance, mais devient très visible à courte distance. A une distance donnée, lorsque l'écart d'affichage d'un élément par rapport à la réalité devient trop important, on choisit alors de changer son affichage voire même d'en supprimer l'affichage. Ainsi, on évite de calculer inutilement des modifications dont la lisibilité serait faible.

L'affichage de l'image de la piste synthétique peut être effectué de différentes façons. Le dispositif de visualisation peut comporter une image réelle du paysage extérieur en superposition sur la vue synthétique du paysage extérieur. Ce système est connue sous l'appelation « Combined Vision System ». Le dispositif de visualisation peut être un des écrans de la planche de bord de l'aéronef. Le dispositif de visualisation peut également être un dispositif de visualisation dit « Tête Haute » comportant un élément optique superposant l'image synthétique de la piste ainsi modifiée sur le paysage extérieur. Là encore, il peut comporter une image réelle du paysage extérieur.

## Revendications

1. Procédé de représentation graphique tridimensionnelle d'au moins une piste d'atterrissage (P) sur un dispositif de visualisation d'un système de visualisation de bord pour aéronef, ladite représentation graphique étant affichée dans une vue synthétique d'un paysage extérieur, ladite piste comportant une forme rectangulaire (R) colorée, un contour (C) entourant ladite forme et des marquages (M) représentatifs des marquages existants au sol, la position de l'aéronef par rapport à ladite piste étant connue dans un plan horizontal avec une première précision et dans un axe vertical avec une seconde précision, **caractérisé en ce que**, lorsque la première précision est au-delà d'un premier seuil et/ou lorsque la seconde précision est au-delà d'un second seuil, l'aspect de la forme rectangulaire ou du contour ou au moins d'un marquage est modifié.

2. Procédé de représentation graphique selon la revendication 1, **caractérisé en ce que** la modification d'aspect est un agrandissement de la forme rectangulaire, cet agrandissement consistant à rendre flou le périmètre de la forme rectangulaire sur une largeur fonction de la première et/ou de la seconde précision.

3. Procédé de représentation graphique selon la revendication 2, **caractérisé en ce que** le flou est un gradient continu de transparence, la transparence croissant avec la distance au centre de la piste, la loi de transparence étant une fonction gaussienne ou linéaire ou radiale.

4. Procédé de représentation graphique selon la revendication 2, **caractérisé en ce que** le flou est obtenu par un ensemble de rectangles imbriqués, chaque rectangle ayant une valeur de transparence croissant avec la distance au centre de la piste.

5. Procédé de représentation graphique selon l'une des revendications précédentes, **caractérisé en ce que** la modification d'aspect consiste en une transparence progressive de la forme rectangulaire, la transparence étant une fonction croissante de la première et/ou de la seconde précision, la forme rectangulaire étant totalement opaque lorsque la première précision est en-deçà du premier seuil et/ou lorsque la seconde précision est en-deçà du second seuil et totalement transparente lorsque la première précision est au-delà d'un troisième seuil et/ou lorsque la seconde précision est au-delà d'un quatrième seuil.

6. Procédé de représentation graphique selon l'une des revendications précédentes, **caractérisé en ce que** la modification d'aspect consiste à passer le contour en pointillés et à l'agrandir, l'agrandissement étant une fonction croissante de la première et/ou de la seconde précision.

7. Procédé de représentation graphique selon l'une des revendications 1 à 5, **caractérisé en ce que** la modification d'aspect consiste à supprimer le contour.

8. Procédé de représentation graphique selon l'une des revendications précédentes, **caractérisé en ce que** la modification d'aspect consiste en une transparence progressive des marquages, la transparence étant une fonction croissante de la première et/ou de la seconde précision, les marquages étant totalement opaques lorsque la première précision est en-deçà du premier seuil et/ou lorsque la seconde précision est en-deçà du second seuil, et totalement transparents lorsque la première précision est au-delà d'un cinquième seuil et/ou lorsque la seconde précision est au-delà d'un sixième seuil.

9. Procédé de représentation graphique selon l'une des revendications précédentes, **caractérisé en ce que**, lorsque l'affichage comporte plusieurs pistes appartenant à un même aéroport, tout ou partie de la représentation graphique des pistes subit simultanément les mêmes modifications d'aspect.

10. Procédé de représentation graphique selon l'une des revendications précédentes, **caractérisé en ce que** les modifications d'aspect se font de façon progressive.

11. Procédé de représentation graphique selon l'une des revendications précédentes, **caractérisé en ce que** le procédé comporte au moins deux modifications d'aspect différentes, la première modification d'aspect dépendant du premier seuil et du second seuil de précision, la seconde modification d'aspect dépendant d'un septième seuil et d'un huitième seuil de précision, la seconde modification d'aspect succédant ou s'ajoutant à la première modification.

12. Procédé de représentation graphique selon l'une des revendications précédentes, **caractérisé en ce que** les modifications d'aspect ne sont effectives que lorsque l'aéronef est en-dessous d'une distance déterminée à la piste.

13. Procédé de représentation graphique selon l'une des revendications précédentes, **caractérisé en ce que** le dispositif de visualisation comporte une image réelle du paysage extérieur en superposition sur la vue synthétique du paysage extérieur.

14. Procédé de représentation graphique selon l'une des revendications précédentes, **caractérisé en ce que** le dispositif de visualisation est un des écrans de la planche de bord de l'aéronef.

15. Procédé de représentation graphique selon l'une des revendications 1 à 13, **caractérisé en ce que** le dispositif de visualisation est un dispositif de visualisation dit « Tête Haute » comportant un élément optique superposant l'image synthétique et/ou l'image réelle sur le paysage extérieur.

## Patentansprüche

1. Grafisches 3D-Darstellungsverfahren mindestens einer Landebahn (P) auf einer Luftfahrzeug-Bord-Anzeigevorrichtung, wobei die grafische Darstellung in einer synthetischen Ansicht einer äußeren Landschaft angezeigt wird, wobei die Bahn eine farbige, rechteckige Form (R), eine Kontur (C), welche die Form umgibt und Markierungen (M) beinhaltet, welche am Boden vorhandene Markierungen darstellen, wobei die Position des Luftfahrzeugs in Bezug auf die Bahn in einer horizontalen Ebene mit einer ersten Genauigkeit bekannt ist, und in einer vertikalen Achse mit einer zweiten Genauigkeit, **dadurch gekennzeichnet, dass**, wenn die erste Genauigkeit einen ersten Schwellenwert überschreitet und/oder wenn die zweite Genauigkeit einen zweiten Schwellenwert überschreitet, der Anblick der rechteckigen Form oder der Kontur oder zumindest einer Markierung sich verändert.

2. Grafisches Darstellungsverfahren nach Anspruch 1, **dadurch gekennzeichnet, dass** die Anblicksveränderung eine Vergrößerung der rechteckigen Form ist, wobei diese Vergrößerung darin besteht, den Umfang der rechteckigen Form über eine Breite unscharf zu machen, welche eine Funktion der ersten und/oder der zweiten Genauigkeit ist.

3. Grafisches Darstellungsverfahren nach Anspruch 2, **dadurch gekennzeichnet, dass** die Unschärfe ein kontinuierlicher Transparenzgradient ist, wobei die Transparenz mit dem Abstand zum Mittelpunkt der Bahn ansteigt, wobei das Transparenzgesetz eine gauß'sche oder eine lineare oder eine radiale Funktion ist.

4. Grafisches Darstellungsverfahren nach Anspruch 2, **dadurch gekennzeichnet, dass** die Unschärfe durch eine Gruppe von verschachtelten Rechtecken erzielt wird, wobei jedes Rechteck einen Transparenzwert besitzt, welcher mit dem Abstand zum Mittelpunkt der Bahn ansteigt.

5. Grafisches Darstellungsverfahren nach einem der vorhergehenden Ansprüche, **dadurch gekennzeichnet, dass** die Anblicksveränderung in einer progressiven Transparenz der rechteckigen Form besteht, wobei die Transparenz eine ansteigende Funktion der ersten und/oder der zweiten Genauigkeit ist, wobei die rechteckige Form vollständig undurchsichtig ist, wenn die erste Genauigkeit den ersten Schwellenwert unterschreitet und/oder wenn die zweite Genauigkeit den zweiten Schwellenwert unterschreitet, und vollständig transparent, wenn die erste Genauigkeit einen dritten Schwellenwert überschreitet und/oder wenn die zweite Genauigkeit einen vierten Schwellenwert überschreitet.

6. Grafisches Darstellungsverfahren nach einem der vorhergehenden Ansprüche, **dadurch gekennzeichnet, dass** die Anblicksveränderung darin besteht, die Kontur gestrichelt darzustellen und zu vergrößern, wobei die Vergrößerung eine ansteigende Funktion der ersten und/oder der zweiten Genauigkeit ist.

7. Grafisches Darstellungsverfahren nach einem der Ansprüche 1 bis 5, **dadurch gekennzeichnet, dass** die Anblicksveränderung im Beseitigen der Kontur besteht.

8. Grafisches Darstellungsverfahren nach einem der vorhergehenden Ansprüche, **dadurch gekennzeichnet, dass** die Anblicksveränderung in einer progressiven Transparenz der Markierungen besteht, wobei die Transparenz eine ansteigende Funktion der ersten und/oder der zweiten Genauigkeit ist, wobei die Markierungen vollständig undurchsichtig sind, wenn die erste Genauigkeit den ersten Schwellenwert unterschreitet und/oder wenn die zweite Genauigkeit den zweiten Schwellenwert unterschreitet, und vollständig transparent, wenn die erste Genauigkeit einen fünften Schwellenwert überschreitet und/oder wenn die zweite Genauigkeit einen sechsten Schwellenwert überschreitet.

9. Grafisches Darstellungsverfahren nach einem der vorhergehenden Ansprüche, **dadurch gekennzeichnet, dass**, wenn die Anzeige mehrere Bahnen beinhaltet, welche einem gleichen Flughafen zugehören, die gesamte oder ein Teil der grafischen Darstellung der Bahnen gleichzeitig dieselben Anblicksveränderungen erfährt.

10. Grafisches Darstellungsverfahren nach einem der vorhergehenden Ansprüche, **dadurch gekennzeichnet, dass** die Anblicksveränderungen progressiv erfolgen.

11. Grafisches Darstellungsverfahren nach einem der vorhergehenden Ansprüche, **dadurch gekennzeichnet, dass** das Verfahren mindestens zwei unterschiedliche Anblicksveränderungen beinhaltet, wobei die erste Anblicksveränderung vom ersten Schwellenwert und vom zweiten Genauigkeits-Schwellenwert abhängt, wobei die zweite Anblicksveränderung von einem siebenten Schwellenwert und einem achten Genauigkeits-Schwellenwert abhängt, wobei die zweite Anblicksveränderung auf die erste Änderung folgt oder sich zu dieser hinzufügt.

12. Grafisches Darstellungsverfahren nach einem der vorhergehenden Ansprüche, **dadurch gekennzeichnet, dass** die Anblicksveränderungen erst effektiv werden, wenn das Luftfahrzeug sich unterhalb eines bestimmten Abstandes von der Bahn befindet.

13. Grafisches Darstellungsverfahren nach einem der vorhergehenden Ansprüche, **dadurch gekennzeichnet, dass** die Anzeigevorrichtung ein tatsächliches Bild der äußeren Landschaft beinhaltet, welches der synthetischen Ansicht der äußeren Landschaft überlagert ist.

14. Grafisches Darstellungsverfahren nach einem der vorhergehenden Ansprüche, **dadurch gekennzeichnet, dass** die Anzeigevorrichtung einer der Bildschirme des Armaturenbretts des Luftfahrzeugs ist.

15. Grafisches Darstellungsverfahren nach einem der Ansprüche 1 bis 13, **dadurch gekennzeichnet, dass** die Anzeigevorrichtung eine sogenannte "Head up"-Anzeigevorrichtung ist, welche ein optisches Element beinhaltet, welches das synthetische Bild und/oder das tatsächliche Bild der äußeren Landschaft überlagert.

## Claims

1. A method for three-dimensional graphical representation of at least one runway (P) on a display device of an on-board display system for aircraft, said graphical representation being displayed in a synthetic view of an outdoor landscape, said runway comprising a coloured rectangular shape (R), an outline (C) surrounding said shape and markings (M) representing markings existing on the ground, the position of the aircraft relative to said runway being known in a horizontal plane with a first precision level and in a vertical axis with a second precision level, **characterised in that**, when the first precision level is above a first threshold and/or when the second precision level is above a second threshold, the aspect of the rectangular shape or of the outline or of at least one marking is modified.

2. The graphical representation method as claimed in claim 1, **characterised in that** the modification of the aspect is an enlargement of the rectangular shape, with this enlargement involving blurring the perimeter of the rectangular shape over a width as a function of the first and/or of the second precision level.

3. The graphical representation method as claimed in claim 2, **characterised in that** the blurring is a progressive gradient of transparency, the transparency increasing with the distance to the centre of the runway, the transparency rule being a Gaussian or linear or radial function.

4. The graphical representation method as claimed in claim 2, **characterised in that** the blurring is obtained by a set of interleaved rectangles, each rectangle having a transparency value that increases with the distance to the centre of the runway.

5. The graphical representation method as claimed in any one of the preceding claims, **characterised in that** the modification of the aspect involves a progressive transparency of the rectangular shape, the transparency being an increasing function of the first and/or of the second precision level, the rectangular shape being completely opaque when the first precision level is below the first threshold and/or when the second precision level is below the second threshold and being completely transparent when the first precision level is above a third threshold and/or when the second precision level is above a fourth threshold.

6. The graphical representation method as claimed in any one of the preceding claims, **characterised in that** the modification of the aspect involves changing the outline to dashed lines and enlarging it, with the enlargement being an increasing function of the first and/or of the second precision level.

7. The graphical representation method as claimed in any one of claims 1 to 5, **characterised in that** the modification of the aspect involves removing the outline.

8. The graphical representation method as claimed in any one of the preceding claims, **characterised in that** the modification of the aspect involves a progressive transparency of the markings, the transparency being an increasing function of the first and/or of the second precision level, the markings being completely opaque when the first precision level is below the first threshold and/or when the second precision level is below the second threshold, and being completely transparent when the first precision level is above a fifth threshold and/or when the second precision level is above a sixth threshold.

9. The graphical representation method as claimed in any one of the preceding claims, **characterised in that**, when the display comprises a plurality of runways belonging to the same airport, all or some of the graphical representation of the runways simultaneously undergo the same modifications of the aspect.

10. The graphical representation method as claimed in any one of the preceding claims, **characterised in that** the modifications of the aspect occur progressively.

11. The graphical representation method as claimed in any one of the preceding claims, **characterised in that** the method comprises at least two different modifications of the aspect, the first modification of the aspect depending on the first and on the second precision level threshold, the second modification of the aspect depending on a seventh and on an eighth precision level threshold, the second modification of the aspect succeeding or supplementing the first modification.

12. The graphical representation method as claimed in any one of the preceding claims, **characterised in that** the modifications of the aspect are only effective when the aircraft is below a determined distance to the runway.

13. The graphical representation method as claimed in any one of the preceding claims, **characterised in that** the display device comprises an actual image of the outdoor landscape superimposed on the synthetic view of the outdoor landscape.

14. The graphical representation method as claimed in any one of the preceding claims, **characterised in that** the display device is one of the screens of the instrument panel of the aircraft.

15. The graphical representation method as claimed in any one of claims 1 to 13, **characterised in that** the display device is a "Head-Up" display device comprising an optical element superimposing the synthetic image and/or the actual image on the outdoor landscape.
